# EUROPEAN PATENT APPLICATION

(11) **EP 3 459 371 A1**
(43) Date of publication of application: **27.03.2019**
(21) Application number: 18382400.2
(22) Date of filing: 06.06.2018
(51) Int. Cl.: A24F 7/02

(54) **CIGARETTE MOUTHPIECE**

(30) Priority: 21.09.2017 ES 201731095
(71) Applicant: Gimenez Aznar, Antonio, Zaragoza (ES); Gimenez Gracia, Paula María, Zaragoza (ES)
(72) Inventor: Gimenez Aznar, Antonio, Zaragoza (ES); Gimenez Gracia, Paula María, Zaragoza (ES)
(74) Representative: Carpintero Lopez, Francisco

(57) **Abstract**

The present invention consists of a cigarette mouthpiece which includes a flavoring medium so that the smoker takes up the flavoring as they inhale, with the subsequent satisfaction for the smoker, and at the same time filters the smoke. To that end, based on the conventional structuring of a mouthpiece having a body (1) with a slot at its front end for coupling the corresponding end of the cigarette in communication with an inhalation conduit (2), the invention is characterized in that between the inhalation conduit and the slot (3) for receiving the end of the cigarette there is established a chamber (4) in which a flavoring product (5) is placed.

## Description

### OBJECT OF THE INVENTION

The present invention relates to a cigarette mouthpiece, and more specifically to a mouthpiece which, depending on its size, can be used for coupling on the end of a cigar, a cigarette, a cigarillo, etc.

The object of the invention is to provide the general public with a mouthpiece including a flavoring medium so that the smoker takes up the flavoring as they inhale, with the subsequent satisfaction for the smoker, and at the same time filters the smoke.

### BACKGROUND OF THE INVENTION

There is a wide variety of types of cigar and cigarette mouthpieces, such that they incorporate a filtering element having the sole purpose of reducing the passage of harmful chemical elements to the user's lungs but not of providing the user with any flavor to be taken up.

### DESCRIPTION OF THE INVENTION

The proposed cigarette mouthpiece provides tobacco with the flavor of choice during smoking.

More specifically, the cigarette mouthpiece of the invention has the particularity of being able to be reused and being applicable for all type of cigarettes given that, based on the conventional structuring of a mouthpiece, with its longitudinal conduit or passage in communication with the end slot that is suitable in size and shape for receiving the end of the cigarette corresponding to the filter, the cigarette mouthpiece of the invention has the particularity of there being incorporated, internally and in correspondence with the inhalation conduit, going from the slot for receiving the cigarette to the suction end, a flavoring product preferably housed in a chamber in which the flavoring will be retained by any suitable system, where it can optionally be incorporated in a filter located in said chamber, which filter does not necessarily have to be arranged in the mouthpiece, such that the flavoring product can be established in said chamber, with the flavoring product and the filter in an independent manner, or the filter infused with the flavoring product.

Based on this structuring and any of the versions thereof, when the smoker inhales, he or she will also inhale the flavoring incorporated in the mouthpiece along with the smoke inhaled when lighting up the cigarette, cigar, or element in question, where it can be used as many times as desired until the flavoring runs out, and where it can even be refilled by any suitable means or system.

Specifically, the mouthpiece will preferably be made from plastic, such that if it has a filter, it will provide the smoker with flavor in addition to filtering the smoke produced when lighting up the cigarette.

The flavoring can be incorporated in the mouthpiece in crystallized form, i.e., in the form of salts, performing the filtering function as they come into contact with the smoke and furthermore infusing the smoke with added flavor.

The flavoring can also be incorporated on granules of porous, heat-resistant material such as sepiolite, arranged in irregular volumetric shapes inside the chamber, retaining nicotine and tar and at the same time providing flavor.

The flavoring can also be incorporated as a liquid that infuses the filter which the actual inner chamber of the mouthpiece incorporates between the inhalation conduit and the slot for coupling the end of the cigarette, such that in this case the acetate which will be infused with the flavoring liquid performs filtration, and this will change the flavor of the smoke.

Finally, it must be stated that the mouthpiece can be used even without a cigarette, the air inhaled through the mouthpiece in those closed spaces in which smoking is not allowed absorbing the flavoring.

### DESCRIPTION OF THE DRAWINGS

To complement the description that will be made below and for the purpose of helping to better understand the features of the invention according to a preferred practical embodiment thereof, a drawing is attached as an integral part of said description in which the following is depicted with an illustrative and non-limiting character

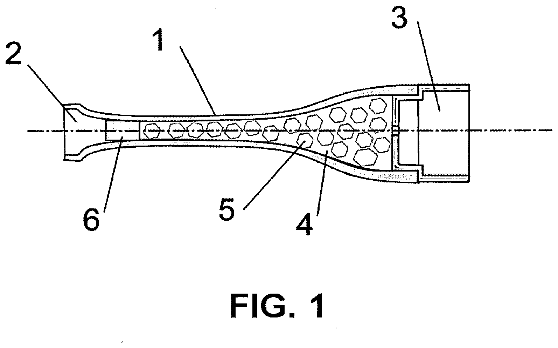

Figure 1 shows a longitudinal section view of a cigarette mouthpiece made according to the object of the present invention.

### PREFERRED EMBODIMENT OF THE INVENTION

In view of the mentioned drawing, it can be observed how the cigarette mouthpiece proposed by the invention is formed by a body (1), which may have a larger or smaller size, i.e., larger or smaller length, preferably made from plastic, although it could also be obtained from metal or any suitable material, such that in any case, the mouthpiece incorporates, as is conventional, the corresponding inhalation conduit or passage (2) ending in the corresponding slot (3) of the front end where there is coupled the end or mouthpiece of the actual cigarette, not depicted in the drawings, although the device may be scaled for use in cigars, cigarillos, and the like.

Now, in accordance with the essence of the invention the body of the mouthpiece (1) located between the inhalation conduit (2) and the slot (3) for coupling the end of the cigarette incorporates an inner chamber (4) in which there is arranged a flavoring product (5) which, in the embodiment depicted in the drawing, partially occupies said chamber since a filter (6) is incorporated in a parallel manner in said chamber; said flavoring product (5), however, may completely occupy said chamber (4) or be infused in the filter (6) itself, without this affecting the essence of the invention, or arranged on materials adopting irregular geometric shapes.

Based on this structuring, the smoke inhaled by the smoker goes through the filter (6), said filter retaining tar, nicotine, and other products harmful to health, such that once filtered it passes through the flavoring product (5) so that the smoke reaches the smoker with a flavor that is pleasant for the intake thereof.

Finally, it remains to be pointed out that the chamber (4) may optionally incorporate an access for refilling the chamber with the flavoring product when it has been used up completely, for example, through the slot (3) itself.

## Claims

1. Cigarette mouthpiece which is formed by a body (1) preferably made of a plastic material, with a slot at its front end for coupling the corresponding end of the cigarette, cigar, or cigarillo in question in communication with an inhalation conduit (2), **characterized in that** between the inhalation conduit and the slot (3) for receiving the end of the cigarette there is established a chamber (4) in which a flavoring product (5) is placed.

2. Cigarette mouthpiece according to claim 1, **characterized in that** the flavoring (5) is supported by materials adopting irregular volumetric shapes.

3. Cigarette mouthpiece according to claim 1, **characterized in that** the flavoring product (5) is infused in a nicotine/tar filter (6).

4. Cigarette mouthpiece according to claim 1, **characterized in that** the flavoring (5) is incorporated in the chamber (4) of the mouthpiece in crystallized form, forming salts, or on an adsorbent material with irregular volumetric shapes.

5. Cigarette mouthpiece according to claim 1, **characterized in that** the chamber (4) can incorporate an access for refilling the chamber with the flavoring product in question.
